# EUROPÄISCHE PATENTSCHRIFT

(11) **EP 1 407 208 B1**
(45) Veröffentlichungstag und Bekanntmachung des Hinweises auf die Patenterteilung: **06.12.2006**
(21) Anmeldenummer: 02764729.6
(22) Anmeldetag: 18.07.2002
(51) Int. Cl.: F27B 7/20, C04B 2/10, F27D 13/00, F27B 1/00

(54) **SCHACHTVORWÄRMER**
SHAFT PRE-HEATER
PRECHAUFFEUR DE CUVES

(30) Priorität: 18.07.2001 DE 10134857
(43) Veröffentlichungstag der Anmeldung: 14.04.2004
(73) Patentinhaber: Polysius AG, 59269 Beckum (DE)
(72) Erfinder: PATZELT, Norbert, 59269 Beckum (DE); SCHMITZ, Thomas, 59302 Oelde (DE); SCHUH, Uwe, 59071 Hamm (DE); SCHWAB, Wolfgang, 47249 Duisburg (DE); KUDRAS, Joachim, 59174 Kamen (DE); TÖLKE, Heinz, 59302 Oelde (DE)
(74) Vertreter: Tetzner, Michael
(86) Internationale Anmeldenummer: PCT/EP2002/008028
(87) Internationale Veröffentlichungsnummer: WO 2003/008888

(56) Entgegenhaltungen:
- AGARYSHEV A I: "EFFECTIVENESS OF PRODUCING CONVERTER LIME IN ROTARY KILNS OF NEW DESIGN" STEEL IN TRANSLATION, THE INSTITUTE OF MATERIALS, LONDON, GB, Bd. 22, Nr. 4, 1. April 1992 (1992-04-01), Seiten 170-171, XP000331816 ISSN: 0967-0912

## Beschreibung

Die Erfindung betrifft einen Schachtvorwärmer mit mehreren Schächten zur Aufnahme von stückigem Material, einer Einrichtung zum Befüllen der einzelnen Schächte mit dem vorzuwärmenden, stückigen Material sowie Mitteln zum Begrenzen der Schichthöhe in den Schächten.

Insbesondere bei der Calcination von grobstückigen Materialien, wie z.B. Kalkstein, Dolomit oder Magnesit, mit einer Aufgabekomgröße zwischen 15 - 60 mm werden häufig Drehrohröfen eingesetzt. Zur Effizienzsteigerung sind diesen Drehrohröfen oft Schachtvorwärmer vorgeschaltet. Im Schachtvorwärmer findet unter Ausnutzung der Drehofenabgase eine Vorwärmung und Teilcalcination des stückigen Materials statt. Für einen effizienten Wärmeaustausch und zur Einhaltung eines wirtschaftlichen Druckverlustes muß eine gute Durchströmung der Materialschüttung gegeben sein. Daher ist das Verhältnis zwischen maximaler und minimaler Stückgröße des Einsatzkoms auf 1 : 3 limitiert. So kann z.B. ein Kornspektrum mit 15 - 45 mm oder 20 - 60 mm im Schachtvorwärmer behandelt werden. Im Steinbruch fällt in der Regel jedoch ein größeres Komspektrum an, so dass das Ofensystem entsprechend kampagnenweise betrieben wird.

Zur Gewährleistung einer guten Durchströmung der Materialschüttung ist es erforderlich, die Schichthöhe an das Komspektrum des vorzuwärmenden Materials anzupassen. So ermöglicht ein gröberes Komspektrum eine größere Schichthöhe als ein kleineres Kornspektrum des vorzuwärmenden Materials.

Zur Verarbeitung unterschiedlicher Komspektren ist es daher bekannt, Mittel zum Begrenzen der Schichthöhe in den Schächten vorzusehen. Aus der Praxis ist es beispielsweise bekannt, die Decke aller Schächte in der Höhe zu verstellen, um dadurch die Schichthöhe zu begrenzen.

Diese bekannten Mittel zum Begrenzen der Schichthöhe sind jedoch sehr aufwendig und außerdem kann immer nur ein Komspektrum im Schachtvorwärmer verarbeitet werden.

Aus der DE-B-27 48 670 ist ein Schachtvorwärmer bekannt, der aus polygonal um einen Gaseintrittsschacht herum angeordneten Brenngutschächten besteht. Jeder Brenngutschacht kann unabhängig von den übrigen eine eigene Schichthöhenregelung aufweisen.

Der Erfindung liegt nun die Aufgabe zugrunde, den Schachtvorwärmer dahingehend zu verbessern, dass eine verbesserte Anpassung der Schichthöhe an das Kornspektrum des vorzuwärmenden Materials ermöglicht wird.

Erfindungsgemäß wird diese Aufgabe durch die Merkmale des Anspruches 1 gelöst.

Der erfindungsgemäße Schachtvorwärmer besteht im wesentlichen aus mehreren Schächten zur Aufnahme von stückigem Material, einer Einrichtung zum Befüllen der einzelnen Schächte mit dem vorzuwärmenden, stückigen Material sowie Mitteln zum Begrenzen der Schichthöhe in den Schächten, wobei die Mittel derart ausgebildet sind, dass zumindest in einigen Schächten eine separate Einstellung der Schichthöhe vorgesehen ist, wobei die Mittel zur Begrenzung der Schichthöhe eine Schieberplatte aufweisen. Die Mittel zur Begrenzung der Schichthöhe umfassen weiterhin einen Nadelschieber, wobei die Schieberplatte zur Grobeinstellung und der Nadelschieber zur Feineinstellung der Schichthöhe dient.

Wird die Einrichtung zur Feineinstellung der Schichthöhe durch einen Nadelschieber gebildet, kann dieser während des Betriebes des Schachtvorwärmers betätigt werden, um die Schichthöhe anzupassen.

In einem bevorzugten Ausführungsbeispiel sind in allen Schächten separate Mittel zum Begrenzen der Schichthöhe vorgesehen.

Gemäß einem Ausführungsbeispiel ist die Schieberplatte von oben in den entsprechenden Schacht einführbar ist und deren Unterkante dient zur Begrenzung der Schichthöhe.

Der Schachtvorwärmer weist in an sich bekannter Art und Weise Mittel zum Einleiten eines Heißgasstromes in die Schächte sowie Mittel zum Ableiten des durch die Materialschicht in den einzelnen Schächten geleiteten Heißgasstromes auf. In einer besonderen Ausgestaltung der Erfindung ist zudem eine Meßeinrichtung zur Ermittlung des Druckverlustes des Heißgasstroms innerhalb eines Schachtes vorgesehen, wobei die Mittel zur Begrenzung der Schichthöhe in Abhängigkeit des Druckverlustes ansteuerbar sind.

Weitere Vorteile und Ausgestaltungen der Erfindung werden anhand der nachfolgenden Beschreibung eines Ausführungsbeispieles und der Zeichnung näher erläutert.

In der Zeichnung zeigen
- Fig. 1: eine schematische Längsschnittdarstellung des Schachtvorwärmers,
- Fig.2: eine Schnittdarstellung längs der Linie II-II der Fig.1 und
- Fig.3: eine vergrößerte Teilansicht der Fig.1 im Bereich eines Schachtes.

Der Schachtvorwärmer besteht im wesentlichen aus einem Vorbunker 1, der in mehrere Sektoren 1a, 1b, ... aufgeteilt ist, die sich jeweils unterhalb eines von mehreren Schächten 2a, 2b, ... anschließt.

Die einzelnen Schächte werden über den Vorbunker mittels einer Einrichtung 3 mit dem vorzuwärmenden, stückigen Material 4 befüllt.

Der Vorbunker 1 ist je nach Anzahl der auftretenden Komspektren symmetrisch oder asymmetrisch in einzelne Sektoren unterteilt. Bei einer asymmetrischen Aufteilung wird die Befiilleinrichtung 3 beispielsweise durch eine Drehschurre gebildet. Sind nur zwei unterschiedliche Komspektren zu behandeln, so bietet sich eine symmetrische Aufteilung des Vorbunkers 1 an. Die Beschickung erfolgt dann wechselweise über eine Umstellklappe 3a. Die Verteilung im Vorbunker 1 zu den einzelnen Schächten 2a, 2b, ... erfolgt unter Ausnutzung des natürlichen Böschungswinkels.

Die Vorwärmung und ggf. Teilcalcination des stückigen Materials erfolgt in den einzelnen Schächten 2a, 2b, ..., die um eine Mittelachse 5 des Schachtvorwärmers angeordnet sind. Die Anzahl der einzelnen Schächte ist im Prinzip beliebig, sie wird jedoch üblicherweise zwischen sechs und zwanzig Schächten liegen. Das im Schachtvorwärmer vorgewärmte stückige Material 4 gelangt über ein Einlaufgehäuse 6 in einen Drehrohrofen 7. Zu diesem Zweck sind im unteren Bereich der Schächte Austragseinrichtungen, beispielsweise in Form von Stößeln, vorgesehen. Die Rauchgase des Drehrohrofens werden im Gegenstrom zum Material 4 von unten nach oben durch die einzelnen Schächte 2a, 2b und damit durch die Materialschüttung gezogen. Im unteren Bereich der einzelnen Schächte sind daher geeignete Mittel vorgesehen, um die aus dem Drehrohrofen 7 über das Einlaufgehäuse 6 herausgeführten Rauchgase in die einzelnen Schächte 2a, 2b einzuleiten. Der durch das Rauchgas gebildete Heißgasstrom erwärmt das in den Schächten befindliche stückige Material und wird im oberen Bereich der Schächte über Mittel 8 abgeleitet. Die Mittel 8 werden durch geeignete Rohrleitungen 8a, 8b gebildet, die im oberen Bereich der Schächte 2a, 2b münden.

Da unterschiedliche Komspektren entsprechend unterschiedliche Druckverluste und Wärmeübergänge aufweisen, ist es erforderlich, die Schichthöhe in den einzelnen Schächten an das in diesen befindliche Komspektrum anzupassen. Zu diesem Zweck weisen zumindest einzelne, vorzugsweise alle Schächte Mittel zum Begrenzen der Schichthöhe auf, wobei eine separate Einstellung der Schichthöhe in diesen Schächten möglich ist.

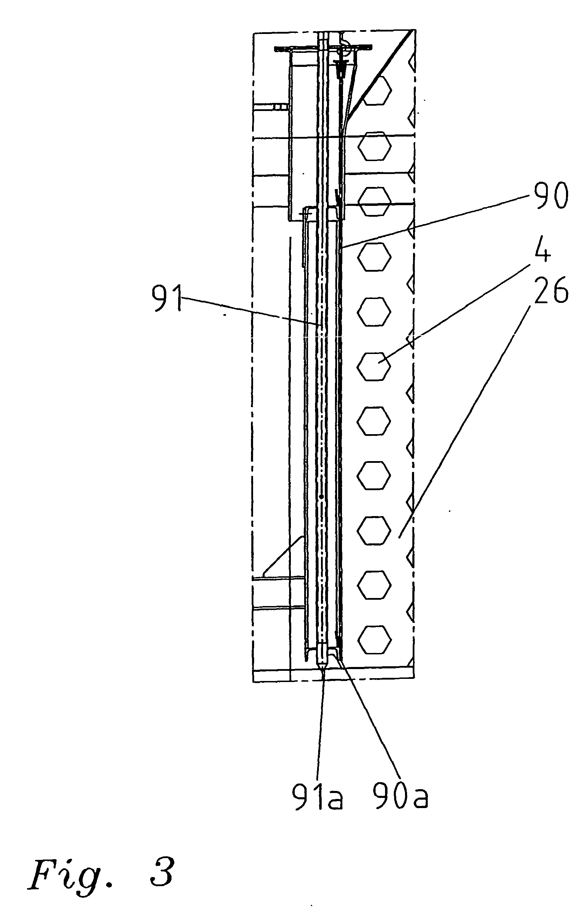

Fig.3 zeigt eine vergrößerte Darstellung des Schachtes 2b im Bereich der Mittel zur Begrenzung der Schichthöhe, die M im wesentlichen aus einer Einrichtung 90 zur Grobeinstellung und einer Einrichtung 91 zur Feineinstellung der Schichthöhe bestehen. Die Mittel 90 zur Begrenzung der Schichthöhe werden durch eine Schieberplatte gebildet, die von oben in den Schacht 2b einführbar ist und deren Unterkante 90a zur Begrenzung der Schichthöhe dient. Die Schieberplatte kann durch einen nicht näher dargestellten Mechanismus in vertikaler Richtung verstellt werden.

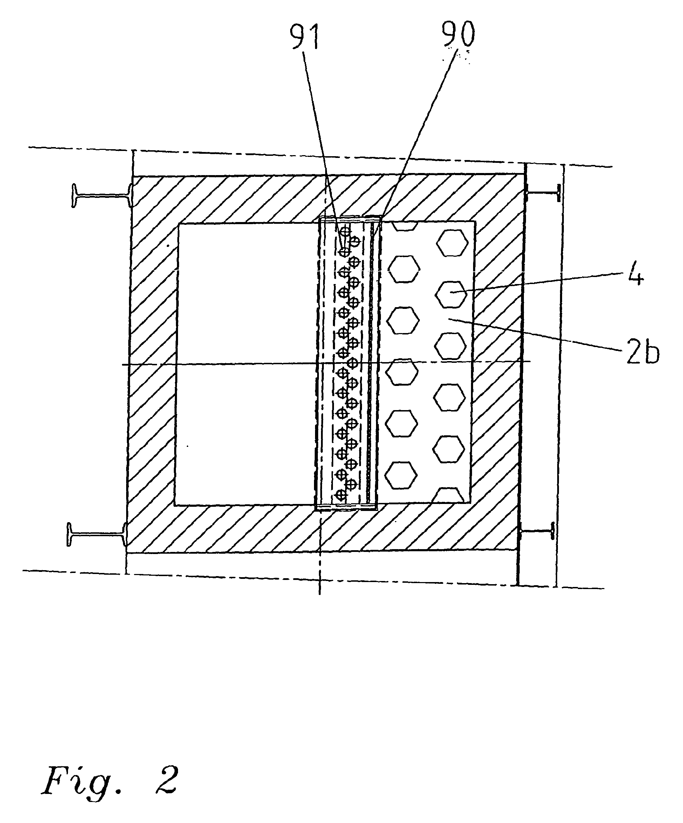

Die Mittel 91 werden durch einen Nadelschieber gebildet, der eine Vielzahl von Stangen aufweist, die in zwei Reihen versetzt zueinander angeordnet sind, wie das insbesondere aus Fig.2 zu ersehen ist.

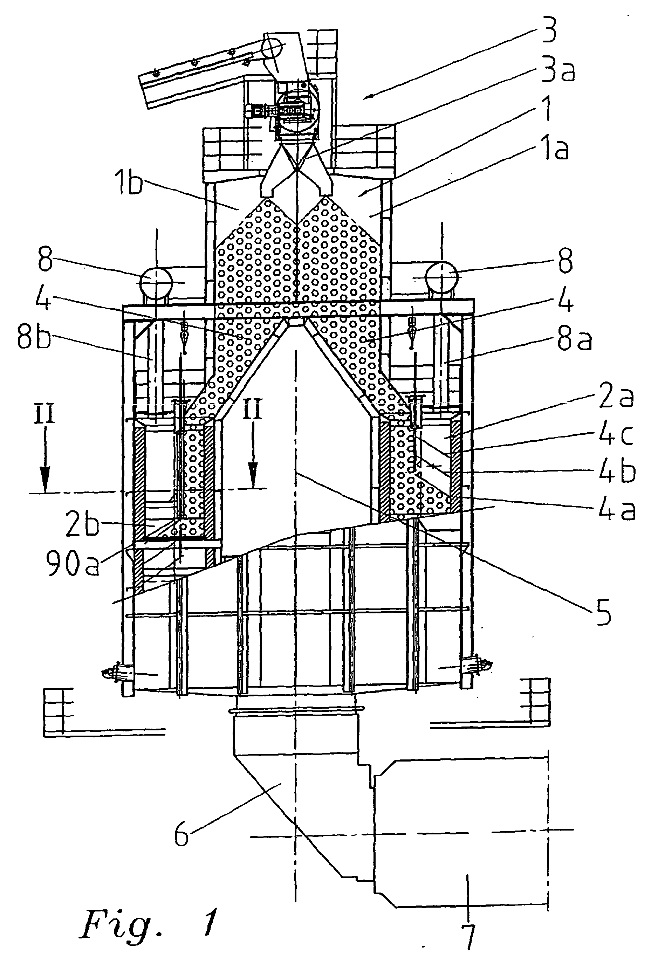

Fig.2 läßt auch erkennen, dass der Schacht 2b einen viereckigen Querschnitt, insbesondere einen quadratischen Querschnitt aufweist. Die Mittel 90, 91 zur Begrenzung der Schichthöhe sind so angeordnet, dass sie mehr als die Hälfte, vorzugsweise etwa ein Drittel des Schachtes abgrenzen, wobei das stückige Material 4 über diesen abgegrenzten Bereich des Schachtes zugeführt wird. Das stückige Material hat somit den vollen Querschnitt des Schachtes 2a erst ab der Unterkante 90a der Schieberplatte oder der Unterkante 91a des Nadelschiebers 91 zur Verfügung. Ab diesen Unterkanten wird sich das stückige Material entsprechend seinem Böschungswinkel verteilen. Im Schacht 2a der Fig.1 sind mit den Bezugszeichen 4a, 4b und 4c drei Böschungsflächen eingezeichnet, die sich bei verschiedenen Stellungen der Schichthöhen-Begrenzungsmittel ausbilden können.

Die Schieberplatte 90, die zur Grobeinstellung der Schichthöhe dient, wird vor Betriebnahme des Vorwärmers rechnerisch ermittelt und eingestellt. Der Nadelschieber 91, dessen Stangen am unteren Ende zugespitzt sind, läßt sich auch während des Betriebes verstellen, so dass eine Feineinstellung entsprechend dem sich tatsächlich einstellenden Druckverlust möglich ist. Auf diese Weise ist es möglich, eine gleichmäßige Durchgasung über den gesammten Vorwärmer auch dann zu erreichen, wenn verschiedene Komspektren und damit unterschiedliche Schichthöhen in den einzelnen Schächten eingestellt werden müssen.

Zweckmäßigerweise wird jedem Schacht eine Meßeinrichtung zur Ermittlung des Druckverlustes des Heißgasstromes innerhalb des Schachtes zugeordnet. Die Mittel zur Begrenzung der Schichthöhe werden dann in Abhängigkeit des Druckverlustes angesteuert.

Der durch das Rauchgas des Drehrohrofens gebildete Heißgasstrom, der die einzelnen Schächte von unten nach oben durchströmt, folgt im Bereich der Schichthöhen-Begrenzungsvorrichtung dem Weg des geringsten Widerstandes und verläßt somit die Schüttung im Bereich der schrägen Böschungsflächen, die sich durch die Unterkante der Schichthöhen-Begrenzungsvorichtung ergeben haben. Der Heißgasstrom wird dann über die Ableitmittel 8 abgeleitet.

Die Schichthöhen-Begrenzungsvorichtung ist so ausgelegt, dass auf das Einführen der Schieberplatten 90 dann verzichtet werden kann, wenn der Vorwärmer mit dem gröbsten Komspektrum betrieben wird.

## Patentansprüche

1. Schachtvorwärmer mit
- mehreren Schächten (2a, 2b, ...) zur Aufnahme von stückigem Material (4),
- einer Einrichtung (3) zum Befüllen der einzelnen Schächte mit dem vorzuwärmenden, stückigen Material
- sowie Mitteln (9) zum Begrenzen der Schichthöhe in den Schächten, wobei die Mittel (9) derart ausgebildet sind, dass zumindest in einigen Schächten (2a, 2b,...) eine separate Einstellung der Schichthöhe vorgesehen ist, wobei die Mittel (9) zur Begrenzung der Schichthöhe eine Schieberplatte (90) umfassen,
**dadurch gekennzeichnet, dass** die Mittel (9) zur Begrenzung der Schichthöhe weiterhin einen Nadelschieber (91) umfassen, wobei die Schieberplatte (90) zur Grobeinstellung und der Nadelschieber (91) zur Feineinstellung der Schichthöhe dient.

2. Schachtvorwärmer nach Anspruch 1, **dadurch gekennzeichnet, dass** in allen Schächten separate Mittel (9) zur Begrenzung der Schichthöhe vorgesehen sind.

3. Schachtvorwärmer nach Anspruch 1, weiterhin **gekennzeichnet durch** einen Vorbunker (1), über den die einzelnen Schächte mit stückigem Material befüllt werden, wobei der Vorbunker in einzelne Sektoren unterteilt ist.

4. Schachtvorwärmer nach Anspruch 1, **dadurch gekennzeichnet, dass** die Schieberplatte (90) von oben in den entsprechenden Schacht einführbar ist und deren Unterkante (90a) zur Begrenzung der Schichthöhe dient.

5. Schachtvorwärmer nach Anspruch 1, **dadurch gekennzeichnet, dass** der Nadelschieber (91) während des Betriebes des Schachtvorwärmers betätigbar ist.

6. Schachtvorwärmer nach Anspruch 1, **dadurch gekennzeichnet, dass** Mittel zum Einleiten eines Heißgasstromes in die Schächte sowie Mittel (8) zum Ableiten des durch die Materialschicht in den einzelnen Schächten geleiteten Heißgasstromes vorgesehen sind.

7. Schachtvorwärmer nach Anspruch 1, **dadurch gekennzeichnet, dass** Mittel zum Einleiten eines Heißgasstromes in die Schächte sowie Mittel (8) zum Ableiten des durch die Materialschicht in den einzelnen Schächten geleiteten Heißgasstromes vorgesehen sind, wobei ferner eine Meßeinrichtung zur Ermittlung des Druckverlustes des Heißgasstromes innerhalb des Schachtes vorgesehen ist und die Mittel (9) zur Begrenzung der Schichthöhe in Abhängigkeit des Druckverlustes ansteuerbar sind.

## Claims

1. Shaft preheater with
- a plurality of shafts (2a, 2b, ...) for receiving lumpy material (4),
- a device (3) for filling the individual shafts with the lumpy material to be preheated
- as well as means (9) for limiting the layer height in the shafts, the means (9) being constructed in such a way that a separate adjustment of the layer height is provided at least in some shafts (2a, 2b, ...), wherein the means (9) for limiting the layer height comprise a slide plate (90),
**characterised in that** the means (9) for limiting the layer height further comprise a needle valve (91), wherein the slide plate (90) serves (90) for coarse adjustment and the needle valve (91) serves for fine adjustment of the layer height.

2. Shaft preheater as claimed in Claim 1, **characterised in that** separate means (9) for limiting the layer height are provided in all shafts.

3. Shaft preheater as claimed in Claim 1, further **characterised by** a feed bin (1) by which the individual shafts are filled with lumpy material, the feed bin being divided into individual sectors.

4. Shaft preheater as claimed in Claim 1, **characterised in that** the slide plate (90) can be introduced from above into the corresponding shaft and the lower edge (90a) of the slide plate serves for limiting the layer height.

5. Shaft preheater as claimed in Claim 1, **characterised in that** the needle valve (91) can be actuated during operation of the shaft preheater.

6. Shaft preheater as claimed in Claim 1, **characterised in that** means for introducing a hot gas stream into the shafts are provided as well as means (8) for drawing off the hot gas stream led through the material layer into the individual shafts.

7. Shaft preheater as claimed in Claim 1, **characterised in that** means for introducing a hot gas stream into the shafts are provided as well as means (8) for drawing off the hot gas stream led through the material layer into the individual shafts, wherein furthermore a measuring device for determining the pressure loss of the hot gas stream is provided within the shaft and the means (9) for limiting the layer height are controllable as a function of the pressure loss.

## Revendications

1. Préchauffeur de cuve avec
- plusieurs cuves (2a, 2b, ...) pour recevoir du matériau en morceaux (4),
- un dispositif (3) pour le remplissage des différentes cuves avec le matériau en morceaux à préchauffer,
- ainsi que des moyens (9) pour limiter la hauteur de couche dans les cuves, dans lequel les moyens (9) sont conçus de telle sorte qu'au moins dans certaines cuves (2a, 2b, ...), il est prévu une régulation séparée de la hauteur de couche, dans lequel les moyens (9) pour délimiter la hauteur de couche comprennent une plaque de poussoir (90),
**caractérisé en ce que** les moyens (9) pour délimiter la hauteur de couche comprennent, de plus, un poussoir à aiguille (91), dans lequel la plaque de poussoir (90) sert à la régulation grossière et le poussoir à aiguille (91) à la régulation précise de la hauteur de couche.

2. Préchauffeur de cuve selon la revendication 1, **caractérisé en ce que**, dans toutes les cuves, sont prévus des moyens séparés (9) pour délimiter la hauteur de couche.

3. Préchauffeur de cuve selon la revendication 1, **caractérisé par** une trémie préliminaire (1), par l'intermédiaire de laquelle les différentes cuves sont remplies du matériau en morceaux, dans lequel la trémie préliminaire est divisée en secteurs individuels.

4. Préchauffeur de cuve selon la revendication 1, **caractérisé en ce que** la plaque de poussoir (90) peut être introduite par le haut dans la cuve correspondante et son bord inférieur (90a) sert à délimiter la hauteur de couche.

5. Préchauffeur de cuve selon la revendication 1, **caractérisé en ce que** le poussoir à aiguille (91) peut être actionné pendant le fonctionnement du préchauffeur de cuve.

6. Préchauffeur de cuve selon la revendication 1, **caractérisé en ce qu'**il est prévu des moyens pour l'introduction d'un courant de gaz chaud dans les cuves, ainsi que des moyens pour faire dévier le courant de gaz chaud amené à travers la couche de matière dans les différentes cuves.

7. Préchauffeur de cuve selon la revendication 1, **caractérisé en ce qu'**il est prévu des moyens pour l'introduction d'un courant de gaz chaud dans les cuves, ainsi que des moyens (8) pour faire dévier le courant de gaz chaud amené à travers la couche de matière dans les différentes cuves, dans lequel, de plus, il est prévu un dispositif de mesure pour déterminer la perte de pression du courant de gaz chaud à l'intérieur de la cuve, et les moyens (9) pour délimiter la hauteur de cuve peuvent être commandés en fonction de la perte de pression.
